(19) Europäisches Patentamt
European Patent Office
Office européen des brevets

(11) **EP 4 451 542 A1**

(12) **EUROPEAN PATENT APPLICATION**

(43) Date of publication:
**23.10.2024 Bulletin 2024/43**

(21) Application number: **23168194.1**

(22) Date of filing: **17.04.2023**

(51) International Patent Classification (IPC):
**H02M 7/48** $^{(2007.01)}$  **H02M 1/00** $^{(2006.01)}$

(52) Cooperative Patent Classification (CPC):
**H02M 7/4811; H02M 1/0009; H02M 1/0058; H02M 1/0064**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **Viitanen, Tero**
  **00380 Helsinki (FI)**
• **Kohvakka, Mikko**
  **00380 Helsinki (FI)**
• **Leppänen, Veli-Matti**
  **00380 Helsinki (FI)**

(74) Representative: **Kolster Oy Ab**
**Salmisaarenaukio 1**
**P.O. Box 204**
**00181 Helsinki (FI)**

(54) **ARCP CONVERTER AND CONTROL THEREOF**

(57) A power converter system comprises an auxiliary resonant commutated pole (ARCP) converter leg, particularly an ARCP half-bridge, having a series connection of a saturable-core inductor ($L_{sat}$) and at least one bi-directional auxiliary switch ($S_{aux}$) connected to a dc-link neutral point (NP). An ARCP controller is provided to control turn-on of the at least one bi-directional auxiliary switch ($S_{aux}$) to provide an auxiliary current ($I_a$) flowing through the saturable-core inductor ($L_{sat}$), and a saturation instant detector is provided to detect a saturation instant of the saturable-core inductor ($L_{sat}$) due to the auxiliary current ($I_a$) exceeding a saturation current after turn-on of the at least one bidirectional auxiliary switch. The ARCP controller is responsive the detector to continue providing the auxiliary current ($I_a$) and thereby a boost current for a predetermined boost period after the detected saturation instant of the saturable-core inductor ($L_{sat}$) to achieve a desired total boost current.

Fig. 4

**Description**

FIELD OF THE INVENTION

The present invention relates to a soft switching power converter, and more particularly to ARCP (Auxiliary Resonant Commuted Pole) power converters.

BACKGROUND OF THE INVENTION

A dc-ac or ac-dc converter, also known as an inverter or a rectifier respectively, converts power from dc to ac or ac to dc system at desired voltages and frequencies. The inverter therefore can be operated as an adjustable-frequency voltage source. The dc power input to the inverter may be obtained from an existing power supply network through a rectifier or from a battery, fuel cell, photovoltaic array, etc. The filter capacitor(s) across the dc terminals of the inverter provides a fairly constant dc-link voltage. A configuration of having an ac to dc rectifier and dc to ac inverter may be called a dc-link converter.

Pulse-width-modulation (PWM) inverters are widely used in motor drives, uninterruptible power supplies (UPSs), and utility interfaces. Inverter switching components may be simple electronic switches, usually consisting of three terminals or pins, in which the presence of a voltage or current in one terminal allows current to flow between the other two terminals. The inverter switches operate in a switch mode, meaning that that they are controlled to transition from a blocking state (OFF state) to a conducting state (ON state), and vice-versa, by providing control pulses at a high switching frequency $f_s$. In a PWM modulation scheme, the width of control pulses provided to the control inputs of the switching devices is varied in proportion to the amplitude and frequency of a (e.g., sinusoidal) reference signal. The frequency of the reference signal determines the output frequency $f_o$ of the inverter on the AC side. In the blocking state, the voltage drop across the switch is at a maximum, while the current through the switch, however, due to the blocking state, is ideally zero. In the conductive state, the current that flows through the switch is at a maximum, but the voltage drop across the switch is minimal, ideally zero. However, electronic switching devices have a finite switching time, i.e. they they cannot instantly switch from the conductive to the blocking state and vice versa. During this transition interval (commutation), the switch neither completely blocks nor fully conducts, and therefore, neither the voltage across the switch nor the current through the switch is zero. In other words, there is a considerable overlap between voltage and current waveforms. This simultaneous presence of voltage across the switch and current through it means that, during this overlapping period, power is being dissipated within the device. This power loss, called "a switching loss", reduces efficiency of the inverter, and when dissipated in the switch causes a major thermal stress on the switching device. The ability of a switching device to remove heat is limited. As the heat load increases, temperature rises which, in turn, degrades performance.

Conventional PWM inverters are operated under such "hard switching" conditions, where the voltages across the switches and currents through the switches are changed abruptly from high values to zero and vice versa at a high switching frequency $f_s$, with an overlap between the voltage and current waveforms, causing switching losses and generating a substantial amount of electromagnetic interference. The switching losses are proportional to the switching frequency $f_s$ and thereby limit the maximum switching frequency. A high level of EMI is caused due to a wide spectrum of harmonics contained in rectangular PWM waveforms.

Soft-switching techniques aim to eliminate the switching losses by forcing a zero-voltage or a zero-current condition on the switch during a switching event. Switching at zero-voltage crossing is called zero-voltage switching (ZVS) whereas switching at zero-current crossing is called zero-current switching (ZCS). While soft-switching has been successfully applied for simpler applications such as DC-DC converters, it has been difficult to apply to general-purpose inverters (such as to drive AC motors). The auxiliary resonant commutated pole (ARCP) topology is one of the most promising approaches for soft-switching inverters and has distinct potential benefits in a motor drive application. The output voltage wave form during commutation can be shaped to be motor friendly via suitable resonant circuit parameter selections. The stress in motor insulation and bearings is thus reduced. The basic configuration and operation of ARCP is described, for example, an article "The auxiliary resonant commutated pole converter", IEEE-IAS Conference Proceedings 1990, pp. 1228-35, and in US5047913 by R. W. De Doncker et al. The ARCP inverter comprises series-connected dc-link capacitances between the negative (N) and the positive (P) dc-link rails of the dc-link side of the inverter. At a center tap, called a neutral point (NP), of capacitances there is provided a neutral point voltage or potential $U_{NP}$. Each main switching device of the inverter is associated with an antiparallel diode and a resonant capacitor. Further, an auxiliary circuit comprising a resonant inductor and auxiliary switching device(s) is connected between the neutral point and a phase output. The difference between an ARCP inverter and a hard-switched inverter lies in the commutation between states. In the ARCP commutation is accomplished through the auxiliary circuitry in a finite amount of time. The auxiliary circuit is only used when the output is required to commutate from one voltage rail to the other. In order to ensure that the inverter output voltage at least reaches the positive and negative dc rail voltages during each resonant commutation cycle, a boost current is added to the resonant current by appropriately controlling the conduction times of the auxiliary switching devices and the main switching devices. The amount of boost current is controlled by applying a known voltage to a known resonant inductance for a known boosting time. A predetermined boost current level in the resonator inductor adds sufficient energy to the resonant operation to ensure that the output voltage attempts to overshoot the respective converter antiparallel diode and clamping the output voltage to the respective rail voltage. Ideally, the main switches turn on and off in a zero-voltage condition, and the auxiliary switch(es) in zero-current condition, which reduce the occurring switching losses. Consequently, the switching frequency can be increased without a considerable loss penalty. Low acoustic noise of such a drive is appreciated in many applications. High switching frequency also enables higher fundamental output frequencies with low distortion, making the ARCP topology attractive for high-speed drive applications.

The resonant branch of ARCPI topology is prone to excess voltage oscillation and potential overvoltage across the auxiliary switches, which is mainly due to reverse recovery current of auxiliary switches and the LC resonance circuit. One solution has been to use a saturable inductor in series with the conventional core or core-less resonant inductor. The saturable inductor is designed to provide high inductance for very low levels of current, but almost zero inductance above the saturation current. In theory, the boost current increases linearly. In practice, boost current starts to increase slowly and gradually, because saturable inductor slows down the current rise until full saturation current is achieved at saturation instant. If the boost time is calculated theoretically assuming a linearly increasing boost current, the achieved boost current in practice is only a fraction of the optimal and zero voltage switching condition is not achieved. A challenge with the saturable core inductor is that the inductance is non-linear and varies depending on, for example, core material permeability, operating temperature and frequency. Therefore, it is difficult to calculate a correct boost time and control the boost current when a saturable core inductor is used.

BRIEF DESCRIPTION OF THE INVENTION

An object of the present invention to provide an ARCP converter and control thereof which alleviate or overcome the above problems. The objects of the invention are achieved by an ARCP converter and control according to the independent claims. Embodiments of the invention are disclosed in the dependent claims.

An aspect of the invention is a power converter system, comprising

an auxiliary resonant commutated pole (ARCP) converter leg, particularly an ARCP half-bridge, having a series connection of a saturable-core inductor and at least one bi-directional auxiliary switch connected to a dc-link neutral point,
a ARCP controller configured to control turn-on of the at least one bi-directional auxiliary switch to provide an auxiliary current flowing through the saturable-core inductor, and
a saturation instant detector configured to detect a saturation instant of the saturable-core inductor due to the auxiliary current exceeding a saturation current after turn-on of the at least one bidirectional auxiliary switch,
wherein the ARCP controller is responsive the detector to continue providing the auxiliary current and thereby a boost current for a predetermined boost period after the detected saturation instant of the saturable-core inductor so as to achieve a desired total boost current.

In an embodiment, the pre-determined boost period is calculated based on an inductance of a resonant inductor connected in series with the saturable-core inductor, optionally taking into account a saturated inductance of the saturable-core inductor.

In an embodiment, the saturable-core inductor comprises a primary winding and a secondary winding, the auxiliary current flowing through the primary winding, and the saturation instant detector is connected to the secondary winding and configured to detect the saturation instant based on a voltage induced in the secondary winding.

In an embodiment, the saturation instant detector is connected to the dc-link neutral point and configured to detect the saturation instant based on a voltage of the dc-link neutral point.

In an embodiment, the saturation instant detector comprises an auxiliary current sensing unit to sense a rapid change in the auxiliary current.

In an embodiment, the auxiliary current sensing unit comprises a Hall sensor or a Rogowski coil.

In an embodiment, the ARCP converter leg further comprises:

- a series connection of at least two main switching devices between the positive dc-link potential and the negative dc-link potential to alternatively connect the positive and negative dc-link potential, and
- a resonant capacitor associated with each of the at least two main switching devices.

In an embodiment, the power converter system comprises a plurality of ARCP converter legs.

EP 4 451 542 A1

BRIEF DESCRIPTION OF THE DRAWINGS

In the following the invention will be described in greater detail by means of preferred embodiments with reference to the accompanying drawings, in which

Figure 1 is a schematic diagram illustrating an exemplary ARCP inverter;
Figures 2A-2F are diagrams illustrating an example of mode A commutation;
Figures 3A-3D are diagrams illustrating an example of mode B commutation;
Figure 4 is a schematic diagram illustrating an auxiliary circuit with a saturable-core inductor and alternative auxiliary switch position compared to Figure 1;
Figure 5 illustrates an example of behaviour of an auxiliary current in theory and in practice in a basic ARCP commutation;
Figure 6 illustrates an example of behaviour of a auxiliary current Ia in theory and in practice in an ARCP commutation having a boost time control according to an embodiment of the invention;
Fig. 7 is a schematic diagram illustrating an exemplary detector or sensing circuitry according to an embodiment of the invention;
Figure 8 presents simplified waveforms of the boost current and the output voltage of the sensing circuitry of Fig. 7;
Fig. 9 is a schematic diagram illustrating an exemplary detector or sensing circuitry according to another embodiment of the invention;
Figure 10 presents simplified waveforms of the boost current and the output voltages of the sensing circuitry of Fig. 9; and
Fig. 11 is a simplified flow diagram illustrating an exemplary boost time control according to an embodiment of the invention.

DETAILED DESCRIPTION OF THE INVENTION

A dc-ac or ac-dc converter, also known as an inverter or a rectifier respectively, converts power from dc to ac or ac to dc power system at desired voltages and frequencies. Further, a dc-dc converter, such as a dc chopper, converts power from dc to dc power system. Although embodiments are described using inverters and inverter systems as examples, the invention is similarly applicable to rectifiers and rectifier systems as well as dc-dc converters. Inverter and rectifier can be exactly similar in structure and the control operations can be similar, the difference being the direction of a power flow. When a converter operates as an inverter (dc/ac converter), it converts the power from a dc system to an ac system, i.e., the ac side of the converter is referred as an output side and the dc side is considered as an input side. When a converter operates as a rectifier (ac/dc converter), it converts power from an ac system to a dc system, i.e., the ac side of the converter is considered as an input side and the dc side is considered as an output side. Further, connecting ac/dc and dc/dc converters in back-to-back configuration, i.e. dc-sides connected together, between two ac systems, one of the converters is operating in rectifier mode and the other in inverter mode, depending on the power flow direction. Operation modes of the converters may vary during the operation, as power flow may vary.

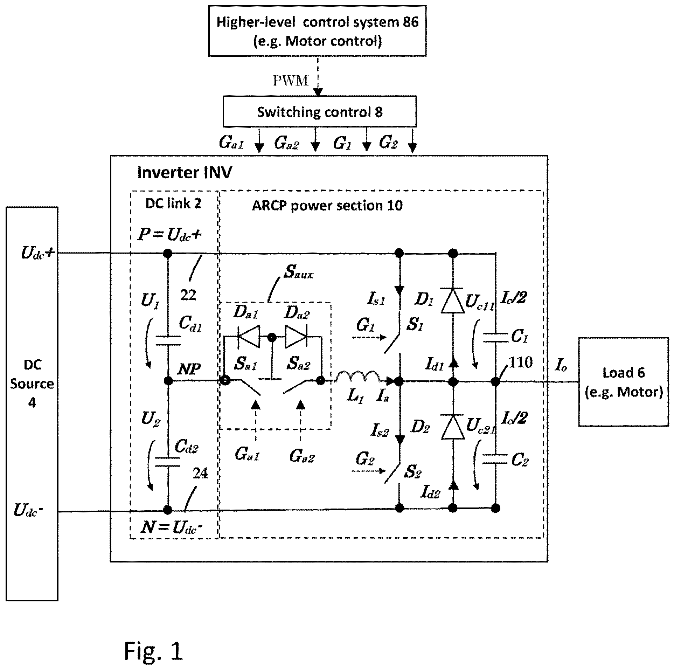

It shall be appreciated that the modulation control according to embodiments of the invention is universally applicable to any type of ARCP inverters and their derivates and modifications regardless the specific design, configuration, and operation variations of an inverter from a basic ARCP inverter. The basic configuration and operation of ARCP is described, for example, an article "The auxiliary resonant commutated pole converter", IEEE-IAS Conference Proceedings 1990, pp. 1228-35, and in US5047913 by R. W. De Doncker et al. The ARCP inverter can be implemented using various topologies, which all perform essentially similarly. The schematic of an exemplary ARCP inverter 1 is illustrated in Figure 1 and described herein in order to alleviate comprehending operation and configuration of embodiments of the invention in relation to an exemplary basic ARCP. It is not intended to limit embodiments of the invention to the described and illustrated exemplary ARCP.

The exemplary ARCP inverter INV1 illustrated in Fig. 1 may be a bridge inverter including a DC-link 2 and a power section 10. The DC-link may include a DC-link 2 comprising a first dc-link rail 2, a second dc-link rail 24, a first dc-link capacitor $C_{d1}$ coupled with the first dc-link rail 22 and a dc-link midpoint, called a neutral point NP1, and a second dc-link capacitor $C_{d2}$ coupled with the second dc-link rail 24 and the neutral point NP1. During operation, the first dc-link rail 22 is at a first voltage, so called positive (P) dc-link potential, and the second dc-link rail 24 is at a second voltage lower than the first DC voltage, so called negative (N) dc-link potential, and the dc-link midpoint NP is at a midpoint voltage, so called neutral point voltage $U_{NP}$. The capacitances of the dc-link capacitors $C_{d1}$ and $C_{d2}$ are substantially equal, for example $C_{d1} = C_{d2} = 2C_{dc}$, so that the voltages $U_1$ and $U_2$ provided across the dc-link capacitors $C_{d1}$ and $C_{d2}$ series-connected between the dc-link rails 22 and 24 are substantially equal, i.e. a half of a dc-linkvoltage $U_{dc} = U_1+U_2$ between the dc-link rails 22 and 24. Thus, also the neutral point voltage or potential $U_{NP}$ essentially corresponds to half of the voltage $U_{dc}$, in other words $U_{NP} = U_{dc}/2$.

4

The dc-link rail 22 (the positive dc-link potential P) and the dc-link rail 24 (the negative dc-link potential N) may be connected to a first voltage terminal $U_{dc+}$ and a second voltage terminal $U_{dc-}$ of the common DC power source 4. The common dc power input to the parallel-connected ARCP inverter modules INV1 and INV2 may be obtained from any kind of a dc power source 4, such as from an existing power supply network through a rectifier, or from a battery, fuel cell, photovoltaic array, etc. It shall be appreciated that dc-link 2 may be provided in a number of forms and may have a number of voltages and other attributes. It shall also be appreciated that the voltage difference between positive and negative dc-link rails is flexible, depending on how the dc-link 2 is charged or how the dc-link 2 is discharged by the connected circuits. For example, some embodiments may use a front-end isolation transformer and rectifier connected to the dc-link with the positive and negative rails floating and the differential voltage typically in the range of 50V-1500V, but in principle in other voltages outside this range as well. In other embodiments, the positive rail, mid-point, or negative rail may be grounded to earth. Preferably, the positive and negative rails are balanced. For example, if the dc-link neutral point NP is at 0 VDC, dc-link rail 22 would be at a positive voltage (e.g., in the range of +25 VDC to +500 VDC, the range of in the range of +150 VDC to +400 VDC or other positive voltage ranges) and dc-link rail 24 would be at a negative voltage corresponding to the positive voltage (e.g., in the range of -25 VDC to - 500 VDC, the range of in the range of -150 VDC to -400 VDC or other negative voltage ranges corresponding to the other positive voltage ranges). It shall be appreciated that the foregoing examples are few of many voltage magnitudes and polarities that may be present in or associated with the operation of dc-link 2. It shall be additionally appreciated that the voltage magnitudes of the foregoing examples may be subject to fluctuation, margins of error, tolerance, and other variations and may not be rigidly fixed to the precise example magnitudes stated. It shall be further appreciated the term bus may be utilized in place of the term link such that, for example, references to a dc-link are understood to encompass a dc-bus and vice versa.

The exemplary half-bridge power section 10 illustrated in Fig. 1 may include a pair of main or power switching devices $S_1$ and $S_2$ coupled in parallel to the dc-link rails 22 and 24 of the dc-link 2. The first main switching device $S_1$ may have a first terminal electrically coupled to the positive dc-link rail 22 and a second terminal electrically coupled to an output node 110. The second main switching device $S_2$ may have a first terminal coupled to output node 110 and a second terminal coupled to the negative dc-link rail 24. Across the first main switching device $S_1$ between the positive dc-link rail 22 and the output node 110 is connected a first antiparallel diode $D_1$, and across the second main switching device $S_2$ between the output node 110 and the negative dc-link rail 24 is connected a second antiparallel diode $D_2$. Further, a first resonant capacitor $C_1$ is operationally connected (i.e., directly or via additional components, such as an active or passive damping circuit series connected with the resonant capacitor) in parallel with the first main switching device $S_1$, and a second resonant capacitor Cz is operationally connected in parallel with the second main switching device $S_2$. More generally, there may be one or more resonant capacitors connected in such manner that at least one terminal of the resonant capacitor(s) is connected to one of the dc-link rails (P, NP, N) and the other terminal(s) is (are) operationally connected to the phase output node 110. The first main switching device $S_1$ is operable to turn on and turn off, and thereby to respectively connect and disconnect the dc-link rail 22 and the output node 110, in response to control signal(s) $G_1$ received from a control and driver circuitry, such as an inverter-specific ARCP switching controller 8 illustrated in Fig. 1. The second main switching device $S_2$ is operable to turn on and turn off, and thereby to respectively connect and disconnect the dc-link rail 24 and the output node 110, in response to control signal(s) $G_2$ received from the control and driver circuitry, such as the ARCP switching controller 8.

In embodiments, the switching devices $S_1$ and $S_2$ may be an insulated-gate bipolar transistor (IGBT), or another type of semiconductor switching device, such as an integrated gate-commutated thyristor (IGCT), a metal-oxide-semiconductor field-effect transistor (MOSFET), or a silicon carbide (SiC) MOSFET to name several examples.

It should be appreciated that although a single-phase ARCP inverter is illustrated as an example herein, an ARCP inverter may be implemented as a three-phase inverter, or generally include any number of inverter phases or inverter legs. Moreover, although a half-bridge ARCP inverter is illustrated as an example herein, the ARCP inverter may have other configurations, particularly a full-bridge configuration. In a multi-phase inverter, there may be an identical ARCP power section 10 for each phase or inverter leg of the inverter, and a common or dedicated dc-link 2 for each phase or inverter leg. In embodiments, power sections 10 of inverter legs in a multi-phase ARCP inverter may be controlled by a same inverter-specific switching controller 8. In embodiments, two or more ARCP inverters or inverter legs may be connected in parallel to feed a common load.

In operation, when the first main switch $S_1$ is turned on (to a conductive state), a first switch current $I_{s1}$ can flow between the dc-link rail 22 and the output node 110. Similarly, when the second main switching device $S_2$ is turned on (to a conductive state), a second switch current $I_{s2}$ can flow between the output node 110 and the dc-link rail 24. On the other hand, when the first main switching device $S_1$ is turned off (to a non-conductive state), the first switch current $I_{s1}$ will not flow in the switch-forward direction between the dc-link rail 22 and the output node 110, although a current $I_{d1}$ may flow in the switch-reverse direction through the first anti-parallel diode $D_1$ of the first main switching device $S_1$. Similarly, when the second main switching device $S_2$ is turned off (to a non-conductive state), the second switch current $I_{s2}$ not flow in the switch-forward direction between the output node 110 and the dc-link rail 24, although a current $I_{d2}$ may flow in the switch-reverse direction through the anti-parallel diode $D_2$ of the second switching device $S_2$. Thus, by

turning on and off the first main switching device $S_1$ and the second main switching device $S_2$, the output voltage at the output node 110 will be controlled or commutated to be either the voltage P from the dc-link rail 22 or the voltage N from the dc-link rail 24. The purpose of the resonant capacitors $C_1$ and $C_2$ is to limit the voltage slew rate of the output node; this ensures that the voltages $U_{c1}$ and $U_{c2}$ across the main switching devices $S_1$ and $S_2$ do not significantly change during turn-off such that the main switching devices are turned off at essentially zero-voltage.

The exemplary half-bridge power section 10 of the ARCP inverter illustrated in Fig. 1 further includes an auxiliary circuit comprising a resonant inductor $L_1$ and a bidirectional auxiliary switch $S_{aux1}$ connected in series between the neutral point NP and the output node 110. It shall be appreciated that the resonant inductor and auxiliary switch may be located in any order in an ARCP circuit without having effect on the invention The auxiliary switch $S_{aux1}$ is operable to turn on and turn off, and thereby to respectively connect and disconnect the neutral point and the output node 110, in response to control signals received from the control and driver circuitry, such as the ARCP switching controller 8. The auxiliary switch $S_{aux1}$ can behave like a bidirectional thyristor: it can be triggered into conduction, and it turns off if or before the current tries to reverse its direction. In embodiments, the bidirectional auxiliary switch $S_{aux1}$ may be implemented with a pair of ordinary switching devices connected back-to-back, for example in a common-emitter or common-collector configuration and provided with anti-parallel diodes. Figure 1 illustrates an exemplary auxiliary switch $S_{aux1}$ comprising a first auxiliary switching device $S_{a1}$ and a second auxiliary switching device $Sa_2$ in a common-emitter series connection, a first anti-parallel diode $Da_1$ connected across the first auxiliary switching device $Sa_1$, and a second antiparallel diode Daz connected across the second auxiliary switching device $Sa_2$. To initiate a new output commutation, one of the two auxiliary switching devices $Sa_1$ and $Sa_2$ is turned on and conducting at a time, in response to control signals $Ga_1$ and $Ga_2$ received from a control and driver circuitry, such as an ARCP switching controller 8 illustrated in Fig. 1. Depending on the main switching devices $S_1$ and $S_2$ conducting states, one of the two antiparallel diodes $Da_1$ and $Da_2$ may be forward biased and thus start conducting current. In this case, the auxiliary current $I_a$ will flow through one forward biased diode in series with one switch. The auxiliary switching devices in the auxiliary circuit are preferably turned on and off at zero-current. When the first auxiliary switching device $Sa_1$ is turned on and the second switching device $Sa_2$ is turned off, the auxiliary current $I_{a1}$ will flow in one direction through $Sa_1$ and $Da_2$. When the first auxiliary switching device $Sa_1$ is turned off and the second switching device $Sa_2$ is turned on, the auxiliary current $I_a$ will flow in the opposite direction through $Sa_2$ and $Da_1$. The auxiliary circuit is only used when the output node 110 is required to commutate from one voltage rail to the other. The auxiliary circuit functions by creating a pulse of current that, in combination with the resonant capacitors, is used to slew the output voltage on the output node 110.

The ARCP switching control 8 illustrated in Fig. 1 refers generally to any control functions, logic, hardware, firmware, software, etc. required to control main and auxiliary switching devices in the ARCP inverter leg(s) based on a PWM signal or PWM signals. Given a PWM signal, a standard hard-switching inverter does not need too much additional logic to form a complete inverter drive system. At a minimum, the direct PWM signal is sent to one switch while the complement of the PWM input signal is sent to the other switch in that phase. The ARCP on the other hand, requires more than the PWM modulation and control: it requires an additional more complex control, particularly due to the auxiliary circuit and the auxiliary switch(es). In the exemplary embodiment illustrated in Fig. 1, the ARCP control 8 is adapted to provide control signals, such as $G_1$, $G_2$, $G_{a1}$ and $G_{a2}$ to the ARCP power section 10 or inverter leg based on a respective PWM signal received from a PWM modulator. The PWM modulator may be e.g., a part of the higher-level control 86 in Fig. 1, and the PWM commands may be sent via a communication link to the inverter INV. The ARCP control 8 may have to provide for instance the following functions for the ARCP power section 10 or inverter leg: Activation of the correct auxiliary switch before commutating the main switches, controlling the boost time, ensuring that the main switches are switched at essentially zero-voltage, ensuring that the auxiliary switches are switched at essentially zero-current, initially starting the switching sequence upon power up, etc. Depending on a selected ARCP control strategy, various sensing feedbacks FB may be required to implement the control algorithms, such as feedback from main switch zero-voltage sensors, auxiliary switch zero-current sensors, an auxiliary current sensor, an output (load) current sensor, a dc-link voltage sensor, a dc-link capacitor sensor(s), a neutral point voltage sensor, etc. In embodiments, a boost time control using a saturation sensing may be included in the switching control 8. In embodiments, a boost time control using a saturation sensing may be implemented by means of Field Programmable Gate Arrays (FPGAs).

As used herein, the mode of commutating the output current $I_o$ from a diode to a switch (e.g., the current $I_o$ from the diode $D_2$ to the switch $S_1$) in ARCP is called mode A and the mode of commutating the output current $I_o$ from a switch to a diode (e.g., the current $I_o$ from the switch $S_1$ to the diode $D_2$) is called mode B, when the auxiliary circuit is involved in commutation and a boost current is provided. The mode of commutating high output current $I_o$ from a switch to diode, when the output current Io itself is sufficient to drive the output voltage from one dc-link rail to another and the auxiliary circuit is not involved, is called mode O herein.

Mode A commutation: If the output current $I_o$ is positive (Io > 0) and the output voltage $U_o$ swings from the potential N (the dc-link 24) to the potential P (the dc-link 22), the lower diode $D_2$ commutate its current $I_{d2}$ to the upper switch $S_1$. If the output current $I_o$ is negative (Io < 0) and the output voltage $U_o$ swings from the potential P (the dc-link 22) to the potential N (the dc-link 24), the upper diode $D_1$ commutates its current $I_{d1}$ to the lower switch $S_2$.

Mode B commutation: If the output current $I_o$ is positive (Io > 0) and the output voltage $U_o$ swings from the potential P (the dc-link 22) to the potential N (the dc-link 24), the upper switch $S_1$ commutates its current to the lower diode $D_2$. If the output current $I_o$ is negative (Io < 0) and the output voltage $U_o$ swings from the potential N (the dc-link 24) to the potential P (the dc-link 22), the lower switch $S_2$ commutates its current to the upper diodes $D_1$.

In the following, examples of typical ARCP commutation in modes A and B are briefly described for a single phase of the ARCP inverter INV.

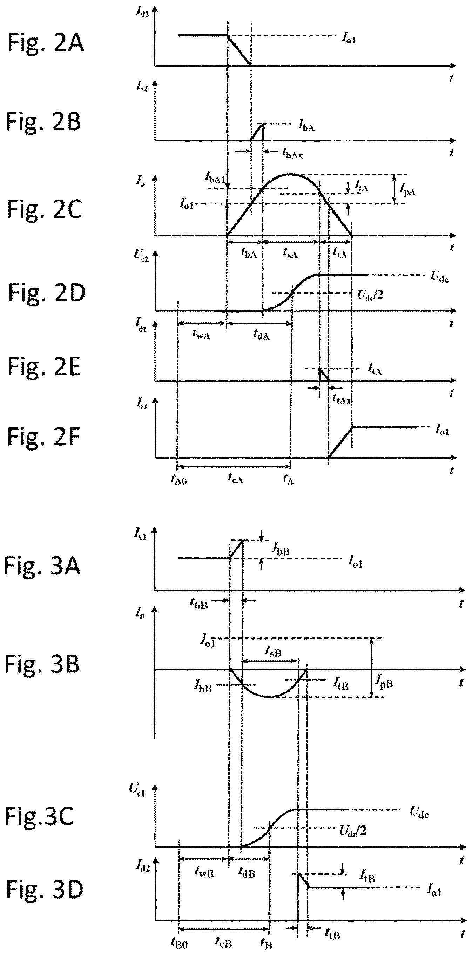

As an example of the mode A, a commutation of the positive output current $I_o$ (Io > 0) from the lower diode $D_2$ to the upper main switch $S_1$ and the output voltage $U_o$ from N to P will described with reference to Figs. 2A-2F.

- The diode $D_2$ is conducting the output current $I_o$ (= $I_{d2}$), the diode $D_2$ supplying the output current $I_o$ (Fig. 2A) and switches $S_1$, $S_{a1}$ and $S_{a2}$ not conducting (turned off); during the commutation $S_2$ turns off and $S_1$ turns on.
- The command for commutation arrives at time instant $t_{Ao}$. The auxiliary switch $Sa_1$ is turned on (at zero current) after a time interval $t_{wA}$, which marks the start of the boosting interval $t_{bA}$. The neutral point voltage $U_{NP}$ is applied across the resonant inductor $L_1$, which causes the auxiliary current $I_a$ through the resonant inductor $L_1$ to ramp up linearly (Fig. 2C), and the current $I_{d2}$ in diode $D_2$ decreases accordingly as $I_{d2} = I_o - I_a$ (Fig. 2A). In order to turn the diode $D_2$ off, the auxiliary current $I_a$ must increase to the level of the output current $I_o$ and even beyond (by a boosting current $I_{bA}$), so that finally $I_a = I_o + I_{bA}$. The boosting current portion $I_{bA}$ of the total inductor current $I_a$ is diverted to the switch Sz parallel to the diode $D_2$ (Fig. 2B) while the load 6 takes its own, i.e., the output current $I_o$.
- The switch $S_2$ is turned off after a time interval $t_{bA}$ (Fig. 2B), which marks the end of the boosting interval $t_{ba1}$, and the commutation swing of the output voltage $U_{c2}$ from N (zero) to P (the full $U_{dc}$) starts. The boosting current $I_{bA}$ must be large enough to force the output potential swing from N to P, charging the capacitor $C_2$ and discharging the capacitor $C_1$. If there is a slight unbalance of the dc link voltage halves so that Uz < $U_1$, more boosting current is needed, and if $U_2 > U_1$, less boosting current suffices.
- The interval for the swing of $U_{C2}$ from zero to $U_{dc}$ has duration $t_{sA}$.

$$t_{sA} = \sqrt{L_1 C} \left[ \cos^{-1} \left( \frac{U_{c2} - U_{dc}}{\sqrt{L_1/C} I_{pA}} \right) - \beta \right] \quad , \quad (1)$$

where
$I_{pA}$ is the peak value of the resonant part of the inductor current

$$I_{pA} = \sqrt{\frac{C U_{c2}^2}{L_1} + I_{bA}^2} \quad , \quad (2)$$

$\beta$ is a phase angle

$$\beta = \sin^{-1} \left( I_{bA}/I_{pA} \right) \quad , \quad (3)$$

and C = $C_1$ + $C_2$ in the exemplary topology B shown in Fig 2. The voltage change rate average is du/dt = $U_{dc}/t_{sA}$.

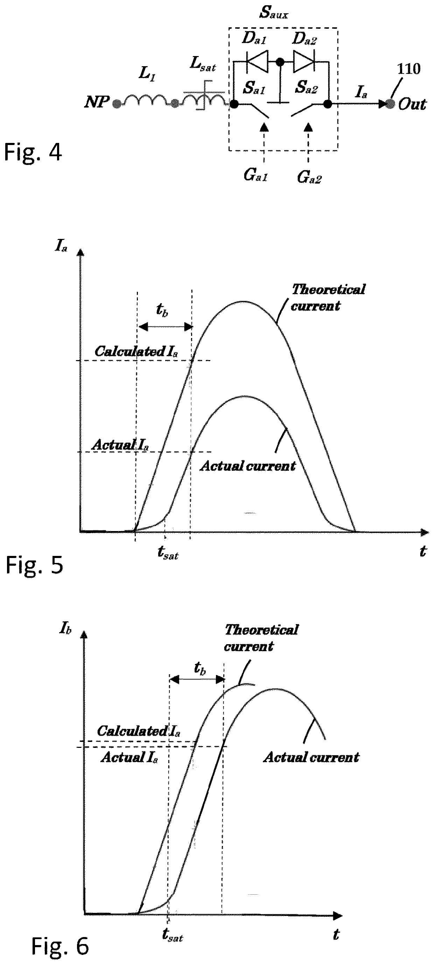

When $U_{c2}$ reaches $U_{dc}$ and $U_{c1}$ reaches zero after a time interval $t_{sA}$ (Fig. 3D), the portion of the auxiliary current Ia exceeding the output current $I_o$ turns on the diode $D_1$ and is called $I_{tA}$ (Figs. 4C and 4D). The switch $S_1$ may be turned on as soon as $U_{c2}$ has reached $U_{dc}$. The boosting time $t_{bA}$ may preferably be set to a value that minimizes the current $I_{tA}$ close to zero. This way the losses and the reverse recovery current of $D_1$ will be minimized, as well as the duration of the commutation. This strategy narrows the window $t_{tAx}$. Thus, the precise timing of $S_1$ turn-on is critical.

- Because the diode $D_1$ and the switch $S_1$ clamp the output voltage to the positive dc potential P, the inductor current $I_a$ decays linearly to zero during a time interval is $t_{tA}$ (Fig. 2C).
- The current $I_{d1}$ decays first from $I_{tA}$ to zero in time $t_{tAx}$, whereafter the switch current $I_{s1}$ increases linearly from zero to the load current level $I_o$ (Fig. 2F) while $I_a$ continues to decrease from $I_o$ towards zero (Fig. 2C), after which the auxiliary diode Da2 turns off and the commutation sequence is finished.
- The total duration of the commutation from the turn-on of the auxiliary switch $Sa_2$ to completion in mode A is $t_A$ = $t_{bA}$ + $t_{sA}$ + $t_{tA}$. There is a current in the auxiliary branch during this time interval.

As an example of the mode B, a commutation of the positive output current $I_o$ ($Io > 0$) from the upper main switch $S_1$ to the lower diode $D_2$ and a swing of the output voltage $U_o$ from N to P will described with reference to Figs. 5A-5D.

- The switch $S_1$ is conducting the output current $I_o$ ($I_o = I_{s1}$) (Fig. 3A) and switches $S_2$, $S_{a1}$ and $S_{a2}$ not conducting (turned off); during the commutation the upper switch $S_1$ turns off and the lower diode $D_2$ turns on.
- The command for commutation arrives at time instant $t_{B0}$. After a waiting time $t_{wB}$, the auxiliary switch $S_{a2}$ is turned on, and boosting current $I_{bB}$ (in negative direction in the inductor $L_1$, positive direction in $S_1$) is linearly built up for a time $t_{bB}$ (Fig. 3B).
- The boosting current adds on top of the load current in the switch $S_1$, which turns off a total current of $I_{s1} = I_o + I_{bB}$ at the end of $t_{bB}$ (Fig. 3A). The swing of $U_{c1}$ from zero to $U_{dc}$ starts (Fig. 3C). The output potential swing from P to N is a combination of the linear portion caused by $I_o$ and a resonant portion caused by $I_{bB}$. The duration of the swing is $t_{sB}$

$$t_{sB} = \sqrt{L_1 C} \left[ \cos^{-1} \left( \frac{U_{c1} - U_{dc}}{\sqrt{L_1/C} I_{pB}} \right) - \frac{\pi}{2} - \gamma \right] , \qquad (4)$$

where
$I_{pB}$ is the peak value of the resonant part of the inductor current,

$$I_{pB} = \sqrt{\frac{C U_{c1}^2}{L_1} + (I_o - I_{bB})^2} , \qquad (5)$$

$\gamma$ is a phase angle,

$$\gamma = \tan^{-1} \left( \frac{\sqrt{C/L_1}\, U_{c1}}{-I_o + I_{bB}} \right) , \qquad (6)$$

and $C = C_1 + C_2$. The voltage change rate average is $du/dt = U_{dc}/t_{sB}$.
- The remaining current $I_a$ in the inductance at the end of the swing adds initially on top of the output current $I_o$ in the diode $D_2$ so that $I_{d2} = I_o + I_{tB}$. The diode current decays linearly to the final value $I_o$, as the inductor current reaches zero again after time $t_{tB}$ (Figs. 5B and 5D). The total duration of the commutation in mode B from the triggering of $S_a$ to completion is $t_B = t_{bB} + t_{sB} + t_{tB}$.

The descriptions above for modes A and B assumed a positive direction of $I_o$. The operation for a negative $I_o$ ($I_o < 0$) is identical, just the roles of $S_1$ and $S_2$, $D_1$ and $D_2$, and $U_{c1}$ and $U_{c2}$ are swapped from mode A to mode B, and vice versa.

The resonant branch of the ARCPI topology is prone to an excess voltage oscillation and potential overvoltage across the auxiliary switches $S_{a1}$ and $S_{a2}$, which is mainly due to reverse recovery current of auxiliary diodes $D_{a1}$ and $D_{a2}$ and the LC resonance circuit. The resonant inductor $L_1$ may typically be a conventional inductor with or without a magnetic core, and one solution for the oscillation and overvoltage problems has been to use a saturable-core inductor $L_{sat}$ in series with the conventional resonant inductor $L_1$ in the auxiliary circuit, as illustrated in Fig. 4. Alternatively, as known for person skilled in the art, there can be also only one inductor in the resonant path, which has the desired saturable-core and inductance characteristics through the operational current range. It shall be appreciated that the resonant inductor, the saturable-core inductor and auxiliary switch may be located in any order in an ARCP circuit without having effect on the invention.

The saturable inductor $L_{sat}$ is designed to provide high inductance for very low levels of current, but almost zero inductance above the saturation current. An example of a behavior of the auxiliary current $I_a$ in theory and in practice in an ARCP commutation with $I_a > 0$ ($I_a$ flows in direction from the neutral point NP) is presented in Fig. 5. Fig. 5 shows that, in theory, the auxiliary current $I_a$ increases linearly. However, in practice, the actual auxiliary current $I_a$ starts to increase slowly and gradually, because saturable inductor $L_{sat}$ slows down the current rise until a full saturation current is achieved at the saturation instant $t_{sat}$. If the boost time $t_b$ is calculated theoretically assuming a linearly increasing auxiliary current Ia, the actual total auxiliary current $I_a$ (and thereby the boost current $I_b$) achieved during the calculated boost time $t_b$ is only a fraction of the optimal current value and the zero-voltage switching condition is not achieved. A challenge with the saturable core inductor $L_{sat}$ is that the inductance is non-linear and varies depending on, for example, a temperature and a frequency. Therefore, it is difficult to calculate a correct boost time and control the boost current when a saturable core inductor is used.

An aspect of invention is a power inverter system having a saturation instant detector configured to detect a saturation instant of a saturable-core inductor, i.e., the instant when the auxiliary current exceeds a saturation current of the saturable-core inductor after turn-on of an auxiliary switch. An ARCP controller is configured to continue providing the auxiliary current for a predetermined boost period after the detected saturation instant of the saturable-core inductor.

The predetermined boost period may be a boost time $t_b$ determined or calculated based on the known inductance of the resonant inductor $L_1$ in a normal manner. Thus, the boost time after saturation instant can be determined precisely using the known inductance of the resonant inductor $L_1$. Basically, the calculated boost time $t_b$ is applied from the detected saturation instant instead of the turn-on instant of the auxiliary switch, and thereby there is a sufficient time for the actual auxiliary current $I_a$ (and thereby the boost current $I_b$) to reach a required or optimal value, as illustrated in Fig. 6. This eliminates the varying characteristics of the saturable inductor in boost time calculation. Consequently, it is possible to control an ARCP inverter optimally to achieve a zero-voltage switching and an optimal efficiency. The saturated inductance of the saturable-core inductor $L_{sat}$ can be assumed to be approximately zero, but any known non-zero saturated inductance of the saturable-core inductor $L_{sat}$ may be taken into account in the determination or calculation of the boost time, if desired.

In embodiments, the ARCP control may calculate a boost time $t_b$ using, for example, the equation (7) for mode A commutations and the equation (8) for mode B commutations

$$t_{bA} = (I_o + I_b)2L_1/U_{dc} \qquad (7)$$

$$t_{bB} = -2L_1I_b/U_{dc} \qquad (8)$$

wherein $L_1$ is the inductance of the resonant inductor of the auxiliary circuit.

In embodiments, the saturable-core inductor comprises a primary winding and a secondary winding. The auxiliary current is flowing through the primary winding and secondary winding is used for saturation sensing purposes. The saturation instant $t_{sat}$ of the saturable inductor $L_{sat}$ can be detected from the voltage induced in the secondary winding. In principle, when the auxiliary current flowing in the primary winding is low and the saturable-core inductor $L_{sat}$ is not saturated, the voltage in the secondary winding is proportional to the voltage of the primary winding. When the auxiliary current increases beyond the saturation current, the voltage induced in the secondary winding drops to near to zero.

As an example, a saturable core inductor may be implemented by routing busbar or wire (forming a primary winding) through one or more saturable transformer cores of a ring or tube shape. A secondary winding may be implemented by routing another parallel wire through the same saturable core, for example.

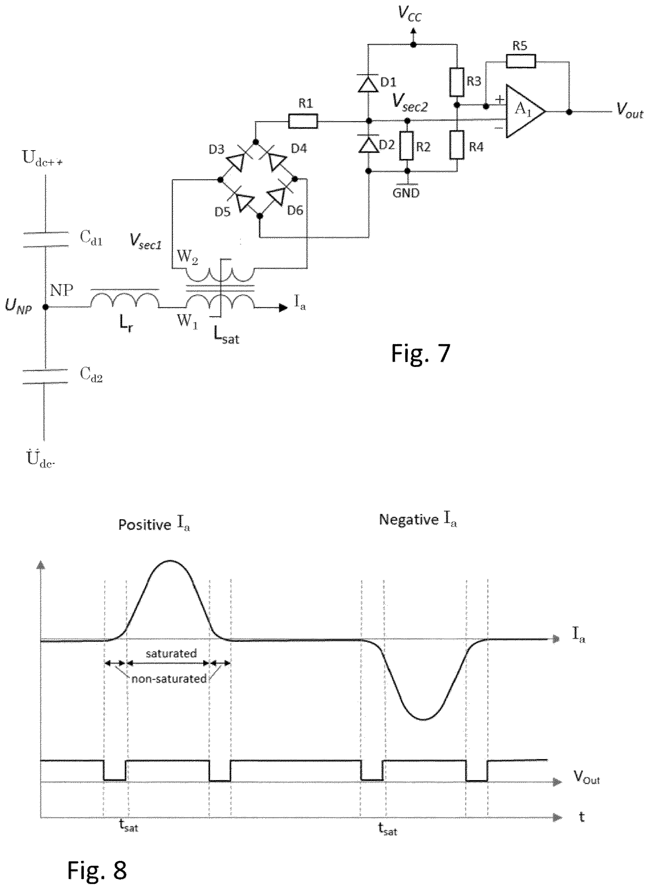

Fig. 7 shows a schematic diagram illustrating an exemplary detector or sensing circuitry according to an embodiment of the invention. An auxiliary current $I_a$ flows through resonant inductor $L_1$ and a saturable-core inductor $L_{sat}$ (a primary winding $W_1$) connected in series with the auxiliary switch $S_{aux}$ between a neutral point NP and the middle point of the inverter leg (output). The auxiliary current $I_a$ induces a secondary voltage $V_{sec1}$ across the secondary winding $W_2$ of the saturable-core inductor. The secondary voltage $V_{sec1}$ is first rectified by a full-bridge rectifier including diodes D3, D4, D5 and D6, and the rectified secondary voltage is then fed to a voltage divider including resistors R1 and R2. The rectification enables that the detector or sensing circuitry operates similarly with both positive and negative auxiliary currents (i.e., currents flowing from and to the NP, respectively). The voltage divider scales the rectified secondary voltage $V_{sec2}$ to an appropriate level for a comparator including an operational amplifier $A_1$ and a feedback resistor R5. In this example, the voltage $V_{sec2}$ is connected to the negative input terminal of the comparator. Clamping diodes D1 and D2 may be connected from the input of the comparator to supply voltage Vcc and ground GND, respectively, to provide overvoltage and undervoltage protections. A reference voltage to the comparator is generated by a voltage divider including resistors R3 and R4. The feedback resistor R5 is used to generate small hysteresis to the circuitry. Figure 8 presents simplified waveforms of the auxiliary current $I_a$ current and the output voltage $V_{out}$ of the sensing circuitry. In practice, the output voltage $V_{out}$ of the comparator is normally in the high state, when there is no auxiliary current Ia. The output voltage $V_{out}$ goes to the low state, when the auxiliary current $I_a$ starts to flow and the saturable-core inductor $L_{sat}$ is operating in a non-saturable region. When the auxiliary current $I_a$ increases and exceeds saturation threshold, the saturable-core inductor $L_{sat}$ is saturated and the output voltage $V_{out}$ of the comparator goes back to the high state. There is a clear rising edge in the output voltage $V_{out}$ which indicates the saturation instant $t_{sat}$.

In embodiments, the saturation instant detector is connected to the dc-link neutral point NP and configured to detect the saturation instant based on a voltage of the dc-link neutral point NP. The dc-link capacitors, such as $C_{d1}$ and

$C_{d2}$, have typically parasitic inductance and resistance, which cause a voltage drop during fast current transient. In principle, a positive auxiliary current $I_a$ causes the neutral point voltage $U_{NP}$ to drop, and a negative auxiliary current $I_a$ causes the neutral point voltage $U_{NP}$ to rise. A sudden drop or rise of the neutral point voltage due to the positive or negative auxiliary current exceeding a saturation threshold can be sensed and used for detecting a saturation instant.

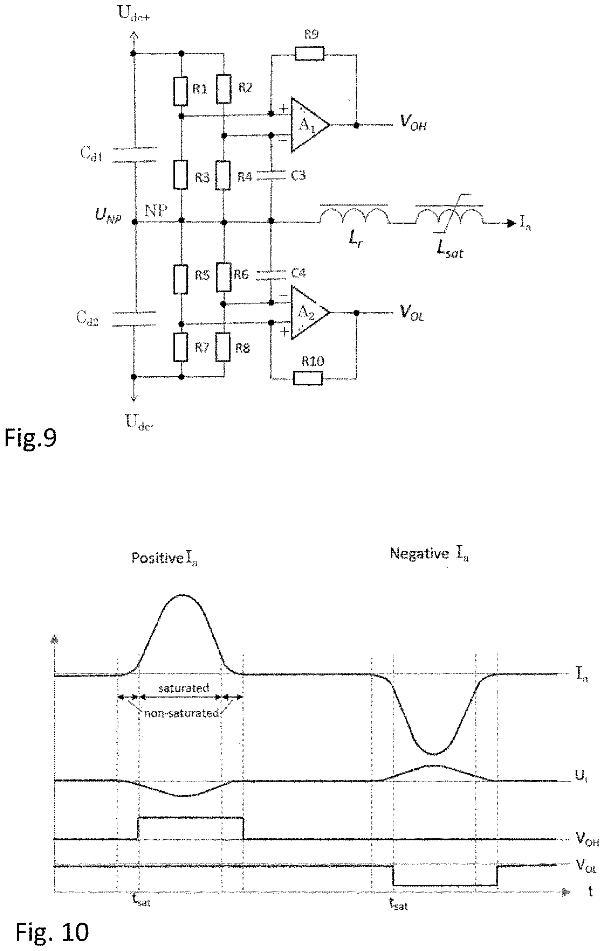

Fig. 9 shows a schematic diagram illustrating an exemplary the detector or sensing circuitry according to an embodiment of the invention. An auxiliary current $I_a$ flows through resonant inductor $L_1$ and a saturable-core inductor $L_{sat}$ connected in series with the auxiliary switch $S_{aux}$ between a neutral point NP and the middle point of the inverter leg (output). The detecting or sensing circuitry uses separate comparator circuitry for positive and negative voltage peaks of the neutral point voltage $U_{NP}$. The upper comparator circuitry senses positive auxiliary current from the neutral point NP through resonant inductor $L_1$ and a saturable-core inductor $L_{sat}$ to the auxiliary switch, which causes the neutral point voltage $U_{NP}$ to slightly drop and the output voltage to swing towards $U_{dc+}$. A voltage divider comprising resistors R1 and R3 between the $U_{dc+}$ and the neutral point NP generates a reference voltage to a positive input of the upper comparator comprising an operational amplifier $A_1$ and a feedback resistor R9. The resistor R9 generates a small hysteresis for the comparator. An input voltage to a negative input of the comparator $A_1$ is generated by a voltage divider comprising resistors R2 and R4 between the $U_{dc+}$ and the neutral point NP. The input voltage is filtered by a capacitor C3 connected between the negative input and the neutral point NP. The capacitor C3 generates a small delay for the negative input. When the voltage between the neutral point voltage $U_{NP}$ and $U_{dc-}$ changes fast, there will be a voltage difference between the positive and negative inputs of the comparator $A_1$, which triggers the comparator output Von to change state accordingly. The lower comparator for detecting a negative auxiliary current pulse operates similarly and generates $V_{OL}$ output. More specifically, the lower comparator circuitry senses a negative auxiliary current to the neutral point NP through resonant inductor $L_1$ and a saturable-core inductor $L_{sat}$ from the auxiliary switch, which causes the neutral point voltage $U_{NP}$ to slightly rise and the output voltage to swing towards $U_{dc-}$. A voltage divider comprising resistors R5 and R7 between the $U_{dc-}$ and the neutral point NP generates a reference voltage to a positive input of the lower comparator comprising an operational amplifier $A_2$ and a feedback resistor R10. The resistor R10 generates a small hysteresis for the comparator. A reference voltage to the comparator is generated by a voltage divider including resistors R6 and R8 between the $U_{dc-}$ and the neutral point NP. An input voltage to a negative input of the comparator $A_2$ is generated by a voltage divider comprising resistors R6 and R8 between the $U_{dc-}$ and the neutral point NP. The input voltage is filtered by a capacitor C4 connected between the negative input and the neutral point NP. The capacitor C4 generates a small delay for the negative input. When the voltage between the neutral point voltage $U_{NP}$ and $U_{dc-}$ changes fast, there will be a voltage difference between the positive and negative inputs of the comparator $A_2$, which triggers the comparator output $V_{OL}$ to change state accordingly.

Figure 10 presents simplified waveforms of an auxiliary current Ia, a sensed neutral point voltage $U_{NP}$, and output voltages $V_{OL}$ and Von of the sensing circuitry. In principle, a positive auxiliary current $I_a$ causes the neutral point voltage $U_{NP}$ to drop, which sets $V_{OH}$ output from low to high. A negative auxiliary current $I_a$ causes the neutral point voltage $U_{NP}$ to rise, which sets $V_{OL}$ output from high to low. The leading edge of the voltage pulse $V_{OH}$ or $V_{OL}$ marks a saturation instant $t_{sat}$.

Other exemplary embodiments for sensing or detecting a saturation instant $t_{sat}$ include an auxiliary current sensing using, for example, a Hall sensor or a Rogowski coil and detecting a rapid increase of current by a very fast AD converter or comparator. A still further example to sense a auxiliary current by a wire or a PCB trace that is located near the high current path (busbar) and sense the voltage induced due to a rapid current change by a comparator.

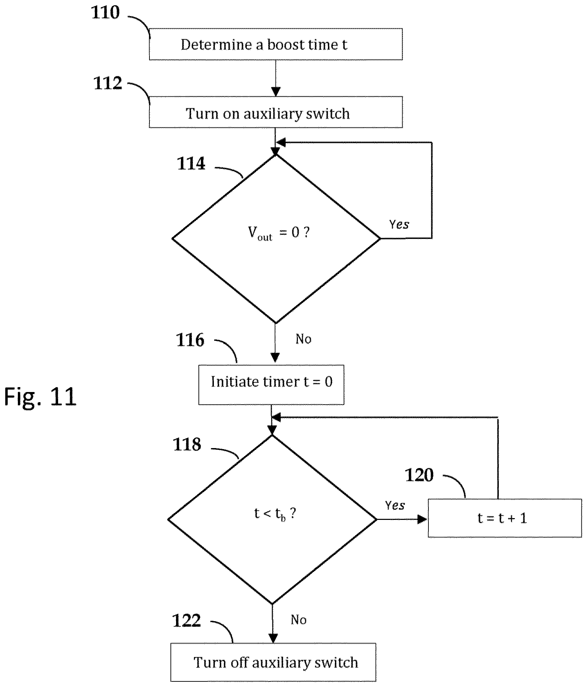

Fig. 11 is a simplified flow diagram illustrating an exemplary boost time control by detecting a saturation instant $t_{sat}$ of a saturable-core inductor $L_{sat}$ and continuing providing the auxiliary current (and thereby the boost current) for a predetermined boost period after the detected saturation instant. In this example, it is assumed that the detection input to the boost time control is a detection signal $V_{out}$ as shown in Fig. 8. First, boosting time $t_b$ is calculated by a known resonant inductance using equations 7 and 8, for example (step 110). Then, boosting period is started by turning on the auxiliary switch $S_{aux}$ as in a basic ARCP (step 112). Because the auxiliary current starts to flow through the saturable inductor $L_{sat}$, the detector output $V_{out}$ changes from a high state to a low state as shown in Fig. 8. The boost time control checks the state of the detector output $V_{out}$ and waits in a checking loop (step 114) until the the saturation instant $t_{sat}$ is sensed by the detector and the detector output $V_{out}$ goes back to the high state. In response to the detector output $V_{out}$ going back to the high state, a boost timer counting the boosting period $t_b$ is initiated to zero (step 116), i.e., the boosting period $t_b$ is restarted from the saturation instant $t_{sat}$. The boosting period is continued by the timer (in a loop of steps 118 and 120) until the predetermined boosting time $t_b$ has elapsed. Finally, the pre-determined boosting time $t_b$ has elapsed, the auxiliary switch $S_{aux}$ is turned off to end the boost period (step 122). It should be noted that person skilled in the art may use the detected saturation time information in other types of calculation or determination means to correct the boost period, than previous example illustrates.

The ARCP control and boost time control techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

It will be obvious to a person skilled in the art that, as the technology advances, the inventive concept can be implemented in various ways. The invention and its embodiments are not limited to the examples described above but may vary within the scope of the claims.

**Claims**

1.  A power converter system, comprising

    an auxiliary resonant commutated pole (ARCP) converter leg, particularly an ARCP half-bridge, having a series connection of a saturable-core inductor and at least one bi-directional auxiliary switch connected to a dc-link neutral point,
    a ARCP controller configured to control turn-on of the at least one bi-directional auxiliary switch to provide an auxiliary current flowing through the saturable-core inductor, and
    a saturation instant detector configured to detect a saturation instant of the saturable-core inductor due to the auxiliary current exceeding a saturation current after turn-on of the at least one bidirectional auxiliary switch,
    wherein the ARCP controller is responsive the detector to continue providing the auxiliary current and thereby a boost current for a predetermined boost period after the detected saturation instant of the saturable-core inductor so as to achieve a desired total boost current.

2.  The power converter system as claimed in claim 1, wherein the pre-determined boost period is calculated based on an inductance of a resonant inductor connected in series with the saturable-core inductor, optionally taking into account a saturated inductance of the saturable-core inductor.

3.  The power converter system as claimed in claim 1 or 2, wherein

    the saturable-core inductor comprises a primary winding and a secondary winding, the auxiliary current flowing through the primary winding, and
    the saturation instant detector is connected to the secondary winding and configured to detect the saturation instant based on a voltage induced in the secondary winding.

4.  The power converter system as claimed in claim 1 or 2, wherein the saturation instant detector is connected to the dc-link neutral point and configured to detect the saturation instant based on a voltage of the dc-link neutral point.

5.  The power converter system as claimed in claim 1nor 2, wherein the saturation instant detector comprises an auxiliary current sensing unit to sense a rapid change in the auxiliary current.

6.  The power converter system as claimed in claim 5, wherein the auxiliary current sensing unit comprises a Hall sensor or a Rogowski coil.

7.  The power converter system as claimed in any one of claims 1-6, wherein the ARCP converter leg further comprises:

    - a series connection of at least two main switching devices between the positive dc-link potential and the negative dc-link potential to alternatively connect the positive and negative dc-link potential, and
    - a resonant capacitor associated with each of the at least two main switching devices.

8.  The power converter system as claimed in any one of claims 1-7, comprising a plurality of ARCP converter legs.

Fig. 1

Fig. 2A

Fig. 2B

Fig. 2C

Fig. 2D

Fig. 2E

Fig. 2F

Fig. 3A

Fig. 3B

Fig.3C

Fig. 3D

Fig. 4

Fig. 5

Fig. 6

Fig. 7

Fig. 8

Fig.9

Fig. 10

**110** — Determine a boost time t

**112** — Turn on auxiliary switch

**114** — $V_{out} = 0$ ?  → Yes

→ No

**116** — Initiate timer t = 0

**118** — $t < t_b$ ? → Yes → **120** — t = t + 1

→ No

**122** — Turn off auxiliary switch

Fig. 11

**EUROPEAN SEARCH REPORT**

| | Application Number |
|---|---|
| | EP 23 16 8194 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 892 673 A (DELGADO ELADIO CLEMENTE [US] ET AL) 6 April 1999 (1999-04-06)<br>* column 4, line 10; figures 1-6 *<br>* column 5, lines 20-22 *<br>* column 6, lines 24-29,44-48 *<br>* column 8, lines 25-27 *<br>----- | 1-8 | INV.<br>H02M7/48<br>H02M1/00 |
| Y | JP H06 269160 A (MATSUSHITA ELECTRIC WORKS LTD) 22 September 1994 (1994-09-22)<br>* abstract; figures 2,5,7 *<br>----- | 1-8 | |
| Y | US 9 929 663 B1 (BABAZADEH AMIR [US] ET AL) 27 March 2018 (2018-03-27)<br>* column 6, lines 18-29; figures 1-5 *<br>* column 12, lines 28-30 *<br>* column 2, lines 27,28 *<br>----- | 1-5 | |
| Y | SCHWARZER U ET AL: "Characterization of 6.5 kV IGBT modules for hard- and soft-switching operation in medium voltage applications",<br>APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US,<br>vol. 1, 6 March 2005 (2005-03-06), pages 329-335, XP010809809,<br>DOI: 10.1109/APEC.2005.1452946<br>ISBN: 978-0-7803-8975-5<br>* Subsection II. B. Soft-Switching (ARCP) Test Bench;<br>figures 4,18 *<br>----- | 6-8 | TECHNICAL FIELDS SEARCHED (IPC)<br><br>H02M |
| A | US 2015/069984 A1 (CHEN CHE-HSUN [TW] ET AL) 12 March 2015 (2015-03-12)<br>* paragraph [0019]; figure 1 *<br>----- | 1-8 | |

-/--

The present search report has been drawn up for all claims

| Place of search | Date of completion of the search | Examiner |
|---|---|---|
| The Hague | 20 September 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 16 8194

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 105 591 542 A (CHINA GREAT WALL COMPUTER SHENZHEN CO LTD) 18 May 2016 (2016-05-18) * abstract; figures 1-7 * ----- | 1-8 | |
| A | JP 2001 157445 A (FUJI ELECTRIC CO LTD) 8 June 2001 (2001-06-08) * abstract; figures 6,9,17 * ----- | 1-8 | |

TECHNICAL FIELDS
SEARCHED     (IPC)

The present search report has been drawn up for all claims

| Place of search | Date of completion of the search | Examiner |
|---|---|---|
| The Hague | 20 September 2023 | Kanelis, Konstantin |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................

& : member of the same patent family, corresponding
    document

## ANNEX TO THE EUROPEAN SEARCH REPORT
## ON EUROPEAN PATENT APPLICATION NO.

EP 23 16 8194

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2023

| Patent document cited in search report | | Publication date | Patent family member(s) | | Publication date |
|---|---|---|---|---|---|
| US 5892673 | A | 06-04-1999 | NONE | | |
| JP H06269160 | A | 22-09-1994 | NONE | | |
| US 9929663 | B1 | 27-03-2018 | CN | 108512428 A | 07-09-2018 |
| | | | DE | 102018104446 A1 | 30-08-2018 |
| | | | US | 9929663 B1 | 27-03-2018 |
| US 2015069984 | A1 | 12-03-2015 | TW | 201511455 A | 16-03-2015 |
| | | | US | 2015069984 A1 | 12-03-2015 |
| CN 105591542 | A | 18-05-2016 | NONE | | |
| JP 2001157445 | A | 08-06-2001 | NONE | | |

EPO FORM P0459

For more details about this annex : see Official Journal of the European Patent Office, No. 12/82

**EP 4 451 542 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5047913 A, R. W. De Doncker

**Non-patent literature cited in the description**

- The auxiliary resonant commutated pole converter. *IEEE-IAS Conference Proceedings,* 1990, 1228-35